# EUROPEAN PATENT APPLICATION

(11) **EP 4 657 536 A1**
(43) Date of publication of application: **03.12.2025**
(21) Application number: 25178404.7
(22) Date of filing: 23.05.2025
(51) Int. Cl.: H01M 4/04, H01M 4/139, H01B 1/14, H01B 1/20

(54) **METHOD AND DEVICE FOR DISPERSING CONDUCTIVE MATERIAL USING LASER ABLATION IN SOLUTION**

(30) Priority: 29.05.2024 KR 20240070374
(71) Applicant: Samsung SDI Co., Ltd, Gyeonggi-do 17084 (KR)
(72) Inventor: LEE, Jeongyeon, 17084 Yongin-si, Gyeonggi-do (KR)
(74) Representative: Gulde & Partner

(57) **Abstract**

A method for dispersing a conductive material using laser ablation in a solution (1) includes: a first step (ST1) of introducing conductive material particles (P1) into the solution (1); a second step (ST2) of irradiating the conductive material particles (P1) with a laser (L); a third step (ST3) of generating a plasma within the solution to laser-ablate the conductive material particles (P1); and a fourth step (ST4) of dispersing the conductive material particles (P1) in the solution (1) by the laser ablation.

## Description

### FIELD

The present disclosure relates to a method and a device for dispersing a conductive material using laser ablation in a solution.

### BACKGROUND

As is known, a rechargeable battery is a battery that repeatedly performs charging and discharging, unlike a primary battery. A small-capacity rechargeable battery is often used in portable small electronic devices such as a mobile phone, a laptop computer, or a camcorder. A large-capacity and high-density rechargeable battery is often used as a power source for driving a motor of a hybrid vehicle or an electric vehicle or an energy storage device of the hybrid vehicle or the electric vehicle.

### SUMMARY

A purpose of the present disclosure is to provide a method and a device for dispersing a conductive material within a solution. The dispersed conductive material increases an energy density and reduces an internal resistance by improving dispersibility of the conductive material.

A method for dispersing a conductive material using laser ablation in a solution according to embodiments of the present disclosure includes: a first step of introducing conductive material particles into the solution; a second step of irradiating the conductive material particles with a laser; a third step of generating a plasma within the solution to laser-ablate the conductive material particles; and a fourth step of dispersing the conductive material particles in the solution by the laser ablation.

Hence, due to the plasma generated by the laser, the conductive material particles are finely reduced to smaller pieces, which increased overall surface area of the reduced conductive material particles, thereby increasing energy density and reducing an internal resistance.

The second step may be to cause a primary reaction in the solution by the first striking the conductive material particles with the laser and a force may be applied within the conductive material particles such that temperatures of the conductive material particles are increased. Thus, in the second step, the laser may be directed onto the particles and may heat the particles. An advantage of this embodiment may be that the energy content of the particles is efficiently increased.

The solution may comprise or be water. The third step may include performing water decomposition together with gas generation and securing a distance between the conductive material particles by generating a plasma after the temperatures of the conductive material particles are increased. The distance may be a predefined desired minimal distance. Thus, the particles may be heated by the laser at least until the energy and/or the temperature is sufficient to generate the plasma. The plasma may decompose the water. The water decomposition may generate gas. The gas may comprise or be water vapor, hydrogen and/or oxygen. The gas may separate the particles in the solution from each other. An advantage of this embodiment may be that the particles are hindered from reconnecting with each other.

The third step may comprise controlling formation or the generation of the plasma by controlling an irradiation time and/or an output of the laser. The irradiation time and/or the output of the laser may be controlled such that the plasma is generated in the solution. The plasma may be generated such that vibration is applied between the conductive material particles. An advantage of this embodiment may be that the conductive material particles are dispersed more, i.e. that the dispersibility of the conductive material particles is increased.

In the third step, a mixer blade provided inside a container body comprising the solution may be turned in the third step. Thus, the solution comprising the particles may be stirred, e.g. with a mixer blade. An advantage of this embodiment may be that the particles are moved and mixed, allowing for more of the particles being irradiated.

In the third step, the mixer blade may further be revolved and/or rotated. An advantage of this embodiment may be that the particles are moved and mixed with more various movements.

The second step may comprise irradiating the conductive material particles with the laser at a position distanced from a range of the revolving of the mixer blade as the mixer blade is revolved in the third step. An advantage of this embodiment may be that the mixer blade does not absorb the laser radiation, such that the laser radiation efficiently increased the temperature of the particles.

The second step may comprise irradiating the conductive material particles with the laser using pulsed laser equipment. Light from the laser may be reflected by a reflective glass. An advantage of this embodiment may be that the conductive material particles are irradiated at a position outside of a range of the revolving of the mixer blade. An advantage of this embodiment may be that the conductive material particles are irradiated at times when no part of the mixer blade is in the area irradiated with the laser. the conductive material particles are irradiated at pulsed laser equipment can more easily produce laser pulses with power higher than continuous wave laser equipment. An advantage of this embodiment may be that the particle ablation can be done at high efficiency even at temperatures that are lower when using continuous wave laser equipment.

The fourth step may comprise increasing a state of the plasma. The state of the plasma may refer to a region in which the plasma, generated by heating conductive material particles in a solution with a laser, is maintained for a certain period of time. The state of the plasma may be increased by a reaction between the conductive material particles. The reaction may form a bubble or bubbles. The bubble or bubbles may have a gas phase. The bubble or bubbles may provide or generate space in which the conductive material particles are further dispersed in the solution. An advantage of this embodiment may be that the particles are further dispersed.

The fourth step may comprise increasing a size of the bubble such that or until the bubble collapses. An advantage of this embodiment may be that the conductive material particles are further dispersed in the solution.

The irradiation of the conductive material particles by the laser may be repeated for a predetermined time. An advantage of this embodiment may be that the conductive material particles are more uniformly dispersed in the solution.

A device for dispersing a conductive material using laser ablation in a solution according to embodiments of the present disclosure includes: a container body that is adapted to include or includes the solution and conductive material particles; a laser equipment, e.g. pulsed laser equipment, that is aligned, e.g. directed into the container, to irradiate the conductive material particles with a laser; and optionally a mixer blade that is provided within the container body to be driven in revolution and rotation. Hence, due to the plasma generated by the laser, the conductive material particles are finely reduced to smaller pieces, which increased overall surface area of the reduced conductive material particles, thereby increasing energy density and reducing an internal resistance.

The pulsed laser equipment may be configured to irradiate conductive material particles with the laser at predetermined time intervals at a first position, a second position, a third position, and a fourth position that are set at 90-degree intervals in the container body. The mixer blade may revolve at 90-degree intervals. An advantage of this embodiment may be that the mixer blade does not absorb the laser radiation, such that the laser radiation efficiently increased the temperature of the particles.

The device may further include a reflective glass that reflects light from the laser for irradiating the conductive material particles within the container body. An advantage of this embodiment may be that the device can be built in a compact manner.

The pulsed laser equipment may be configured to generate a plasma by irradiating conductive material particles with the laser into the solution to laser-ablate the conductive material particles. An advantage of this embodiment may be that the particles can be uniformly ablated and/or unifirmly dispersed efficiently.

According to the embodiments of the present disclosure, conductive material particles may be introduced into a solution and a laser may irradiate the conductive material particles to laser-ablate the conductive material particles, so that the conductive material particles are uniformly dispersed in the solution. According to the embodiments of the present disclosure, the conductive material particles may be uniformly dispersed in the solution without a dispersion liquid or while a use of the dispersion liquid is minimized so that a cost is reduced.

### BRIEF DESCRIPTION OF THE DRAWINGS

FIG. 1 is a flowchart of a method for dispersing a conductive material using laser ablation in a solution according to some embodiments of the present disclosure.
FIG. 2 is a state diagram in which a conductive material particle is introduced into the solution and a laser is irradiated in the method of FIG. 1.
FIG. 3 is a state diagram in which the laser is irradiated to the conductive material particle of FIG. 2 so that a temperature of the conductive material particle is increased.
FIG. 4 is a state diagram in which a plasma is generated so that a distance between conductive material particles in a state of the plasma is secured after the temperature of the conductive material particle of FIG. 3 is increased.
FIG. 5 is a state diagram in which the conductive material particles vibrate due to fluctuation of the plasma in the state of FIG. 4.
FIG. 6 is a state diagram in which vibration is applied to the conductive material particle of FIG. 5 to form a bubble with a gas phase.
FIG. 7 is a state diagram in which the bubble of FIG. 6 becomes larger and then collapses to become a bubble with a liquid phase.
FIG. 8 is a state diagram in which the bubble of FIG. 7 is collapsed so that the conductive material particles are dispersed in the solution.
FIG. 9 is a configuration diagram of a device for dispersing a conductive material using laser ablation in a solution according to some embodiments of the present disclosure.
FIG. 10 is a plan view showing laser irradiation of pulsed laser equipment of FIG. 9 and rotation of a mixer blade of FIG. 9.
FIG. 11 is a plan view that follows FIG. 10 and shows laser irradiation of the pulsed laser equipment and revolution and rotation of the mixer blade.

### DETAILED DESCRIPTION

Embodiments of the present disclosure will be described more fully hereinafter with reference to the accompanying drawings so that those skilled in the art easily implement the embodiments. The present disclosure may be modified in various different ways, all without departing from the scope of the present disclosure. In order to clearly describe the present disclosure, parts or portions that are irrelevant to the description are omitted, and identical or similar constituent elements throughout the specification are denoted by the same reference numerals.

Terms including an ordinal number such as first, second, and the like may be used to describe various components, but the components are not limited by the terms. The terms are used only for a purpose of distinguishing one component from another component.

When it is described that a component is "connected", "coupled", or "accessed" to another component, the components may be directly connected or accessed to each other, but it should be understood that another component may be "interposed" between the components or the components may be "connected", "coupled", or "accessed" through another component. However, when it is described that a component is "directly connected", "directly coupled", or "directly accessed" to another component, it should be understood that the components may not be "connected", "coupled", or "accessed" through another component.

Throughout the specification, terms such as "comprise" or "have" are intended to designate that a feature, a number, a step, an operation, a constituent element, a part, or a combination thereof described in the specification exists, and it should be understood as not precluding the possibility of the presence or addition of one or more other features, numbers, steps, operations, constituent elements, parts, or combinations thereof. Thus, unless explicitly described to the contrary, the word "comprise" and variations such as "comprises" or "comprising" will be understood to imply the inclusion of stated elements but not the exclusion of any other elements.

Rechargeable batteries include an electrode assembly for charging and discharging an electric current, a case or a pouch for accommodating the electrode assembly and an electrolyte, and an electrode terminal connected to the electrode assembly to draw the electrode assembly out to the outside of the case or the pouch. The electrode assembly may be formed as a jelly roll type formed by winding an electrode and a separator, or as a stack type formed by stacking an electrode and a separator.

In a conventional process for manufacturing the electrode, a conductive material, a filler, and a binder are mixed with a solvent in addition to an active material that is a main material of the electrode to form a fluid slurry, and the fluid slurry is sprayed or applied on a current collector to dry a liquid solvent. To improve dispersibility of the slurry and simplify the mixing step, the conductive material and a dispersant are dispersed in the solvent prior to the mixing, and the conductive material and the dispersant previously dispersed in the solvent are mixed with the active material to prepare an active material slurry.

However, an internal resistance of the active material layer formed of the active material slurry increases by adding the dispersant to the active material, an energy density of the electrode decreases, and it is difficult to ensure adequate dispersity between the conductive material and the active material. For example, because the dispersant is formed of a polymer, the internal resistance may increase and the electrode energy density may decrease when the dispersant is added.

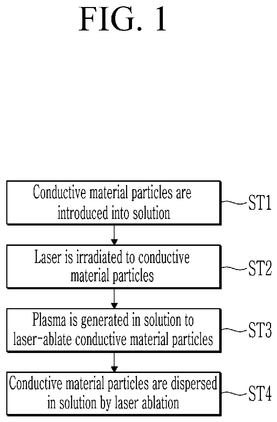

FIG. 1 is a flowchart of a method for dispersing a conductive material using laser ablation in a solution according to some embodiments of the present disclosure. Referring to FIG. 1, the method for dispersing the conductive material using laser ablation in the solution 1 of some embodiments of the present disclosure may include a first step ST1, a second step ST2, a third step ST3, and a fourth step ST4.

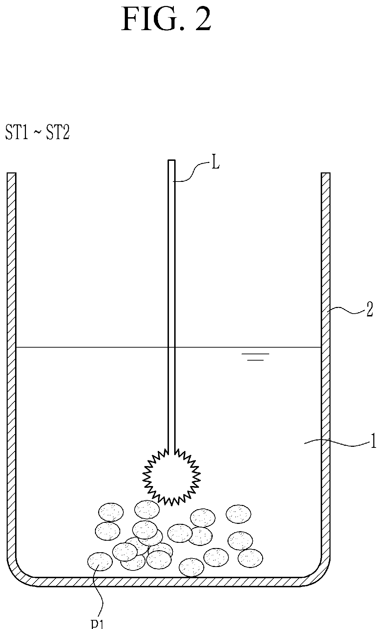

FIG. 2 is a state diagram in which a conductive material particle is introduced into the solution and a laser is irradiated in the method of FIG. 1. Referring to FIG. 1 and FIG. 2, in the first step ST1, conductive material particles P1 may be introduced into a container body 2 containing the solution 1.

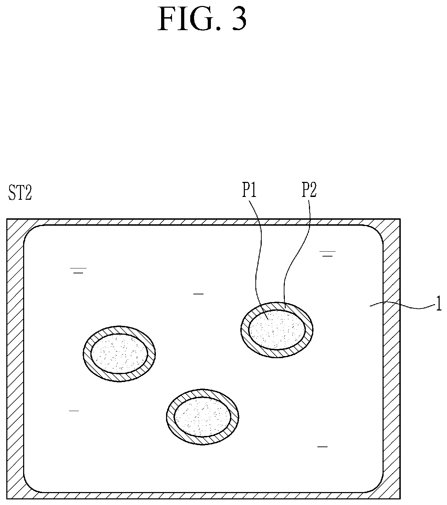

FIG. 3 is a state diagram in which the laser is irradiated to the conductive material particle of FIG. 2 so that a temperature of the conductive material particle is increased. Referring to FIGS. 1 to 3, in the second step ST2, the conductive material particles P1 may be heated by irradiating the laser L to the conductive material particles P1 disposed in the solution 1.

The laser (or laser beam) L may first strike the conductive material particles P1 so that a primary reaction occurs in the solution 1 that is a liquid. The primary reaction may be the first reaction caused by the laser L. The primary reaction may be that the laser L heats the particles P1. Thus, a force may be applied within the conductive material particles P1 so that the temperatures of the conductive material particles P1 are increased P2. The primary reaction where the laser is applied to the conductive material particles P1 to increase the temperatures P2 may take place when the conductive material particles are in a liquid phase or arranged in a liquid, e.g. the solution, which may contain or consist of water.

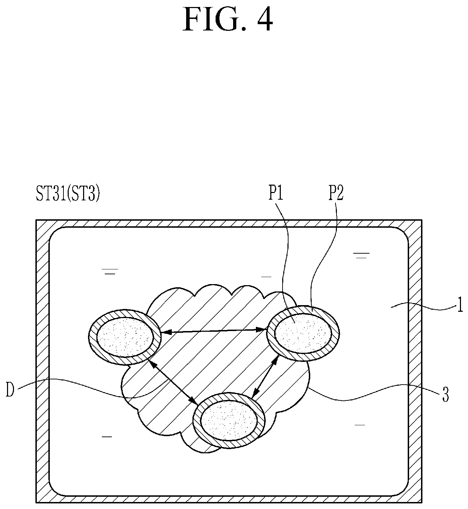

FIG. 4 is a state diagram in which a plasma is generated so that a distance or minimal distance between the conductive material particles in a state of the plasma is secured (e.g., fixed) after the temperature of the conductive material particle of FIG. 3 is increased. Referring to FIGS. 1 to 4, in the third step ST3, the plasma 3 may be generated within the solution 1 to laser-ablate the conductive material particles P1 with the plasma 3. For example, the third step ST3 may include a step ST31 (e.g. step 3-1) and a step ST32 (e.g. step 3-2).

In the step ST31, after the temperature increase (P2) of the conductive material particles P1, the plasma 3 may be generated. Thus, solution or water decomposition may be performed together with gas generation and the distance D or minimal distance between the conductive material particles P1 may be secured (e.g., fixed). The distance D or minimal distance between the conductive material particles P1 may enable dispersion of the conductive material particles P1.

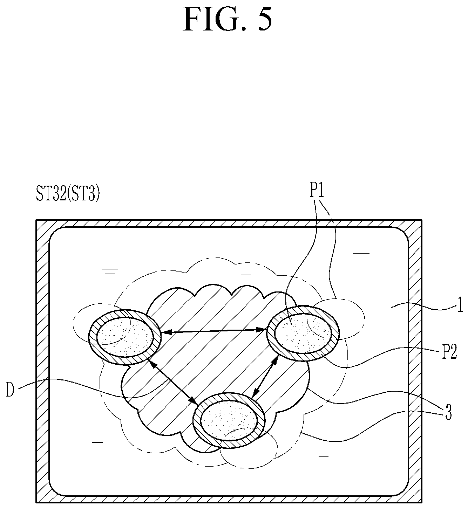

FIG. 5 is a state diagram in which the conductive material particles vibrate due to fluctuation of the plasma in the state of FIG. 4. Referring to FIGS. 1 to 5, in the step ST32, formation of the plasma 3 may be adjusted according to an irradiation time and an output of the laser L. Thus, the state of the plasma may be formed in the solution 1 so that vibration is applied between the conductive material particles P1 and dispersibility thereof is further improved.

For example, as the irradiation time and the output of the laser L change, a size of the plasma 3 and the distance D or actual distance may change and vibration may occur between the conductive material particles P1. Due to the vibration, the dispersibility of the conductive material particles P1 may be further improved.

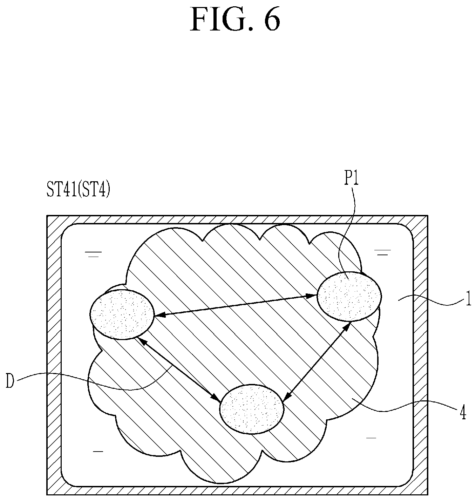

FIG. 6 is a state diagram in which vibration is applied to the conductive material particles of FIG. 5 to form a bubble with a gas phase. Referring back to FIGS. 1 to 6, in the fourth step ST4, the conductive material particles P1 may be dispersed in the solution 1 by laser ablation. The fourth step ST4 may include a step ST41 (e.g. step 4-1) and a step ST42 (e.g. step 4-2).

In the step ST41, the plasma 3 may be increased by a reaction between the conductive material particles P1 in the state of the plasma of FIG. 4 and FIG. 5. Thus, the bubble 4 with the gas phase may be formed so that a space in which the conductive material particles P1 may be further dispersed in the solution 1 is generated.

For example, the conductive material particles P1 having an increased distance D may be effectively dispersed in a space generated by the bubble 4 with the gas phase. The bubble 4 in the solution 1 may increase a space in which the conductive material particles P1 are dispersed more than the bubble with a liquid phase.

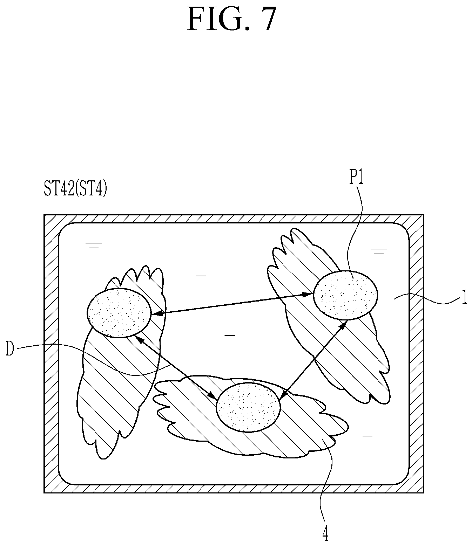

FIG. 7 is a state diagram in which the bubble of FIG. 6 becomes larger and then collapses to become the bubble with the liquid phase. Referring to FIGS. 1 to 7, in the step ST42, the bubble 4 may become larger and then may collapse, and in this case, the dispersed conductive material particles P1 may be further dispersed in the solution 1.

For example, the conductive material particles P1 in which the distance D is further increased may be disposed in a space increased by the bubble 4 with the gas phase and then may be disposed at a position where the bubble 4 is collapsed within the solution 1. Therefore, the conductive material particles P1 may maintain a state in which the conductive material particles P1 are dispersed in the increased space within the solution 1 so that they have more uniform dispersibility within the solution 1.

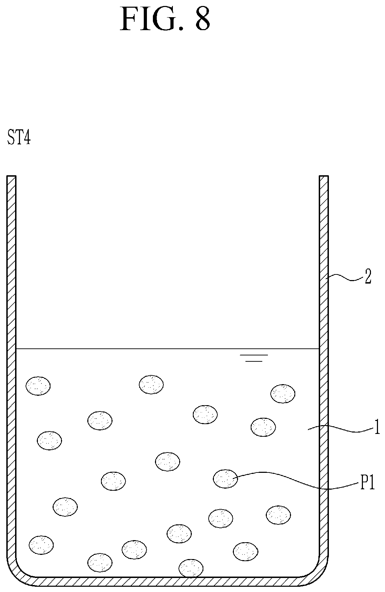

FIG. 8 is a state diagram in which the bubble of FIG. 7 is collapsed so that the conductive material particles are dispersed in the solution. Referring to FIGS. 1 to 8, the conductive material particles P1 passing through the first to fourth steps ST1 to ST4 may have more uniform dispersibility in the container body 2 containing the solution 1.

In the step ST31, the step ST32, the step ST41, and the step ST42, irradiation of the laser L may be repeated for a predetermined time so that the conductive material particles P1 are uniformly dispersed in the solution 1.

In the embodiments of the present disclosure, the laser ablation may be irradiated to the conductive material particles P1 in the solution 1 within several seconds to several minutes, so that the temperatures of the conductive material particles P1 are increased and the plasma 3 is generated.

In the embodiments of the present disclosure, the bubble 4 may be generated within the solution 1 by continuously generating the plasma 3 and then the bubble 4 may be repeatedly collapsed. Thus, the conductive material particles P1 may be effectively dispersed in the solution 1 without using a dispersion liquid.

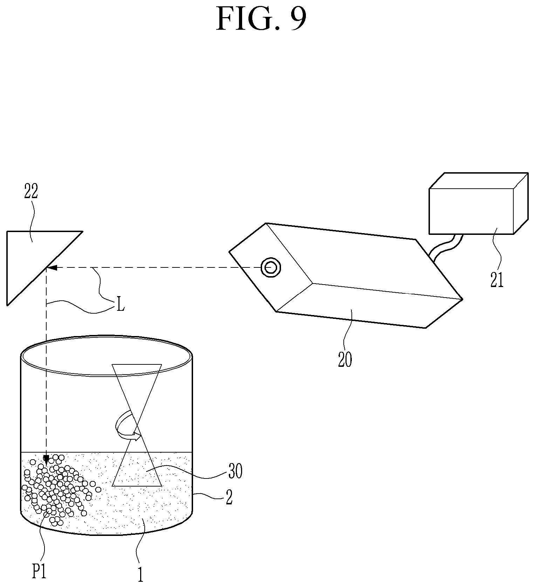

FIG. 9 is a configuration diagram of a device for dispersing a conductive material using laser ablation in a solution according to some embodiments of the present disclosure. Referring to FIG. 9, the device for dispersing the conductive material using laser ablation in the solution of the embodiments of the present disclosure may include the container body 2, a pulsed laser equipment 20, and a mixer blade 30, and may further include a reflective glass 22.

The container body 2 may contain the solution 1 and the conductive material particles P1. The pulsed laser equipment 20 may be connected to a control system 21 to be controlled by the control system 21. Thus, a pulse laser L may be irradiated (e.g., deliver light) to or directed at the conductive material particles P1.

The mixer blade 30 may be provided within the container body 2 so that the mixer blade 30 effectively disperses the conductive material particles P1 in the solution 1 while being driven in revolution and rotation. To this end, the mixer blade 30 may be driven while moving to a first position PS1, a second position PS2, a third position (not shown), and a fourth position (not shown) that are set at 90-degree intervals in the container body 2. For example, the pulsed laser equipment 20 may irradiate the laser L at each position. In this case, the rotation R1 and the revolution R2 of the mixer blade 30 may not interfere with the laser L.

The first position PS1, the second position PS2, the third position (not shown), and the fourth position (not shown) where the laser L is irradiated may maintain a maximum distance from the mixer blade 30 to prevent interference with the mixer blade 30 that performs the rotation R1 and the revolution R2.

The reflective glass 22 may be configured and installed so as to reflect the laser L irradiated from the pulsed laser equipment 20 to the conductive material particles P1 within the container body 2. The pulsed laser equipment 20 may generate the plasma by irradiating the laser L into the solution 1 to laser-ablate the conductive material particles P1.

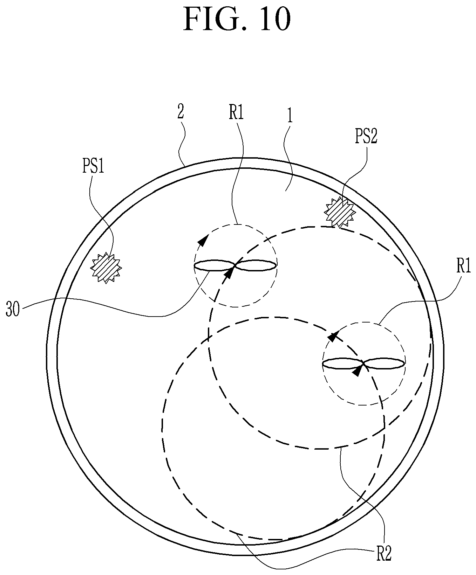

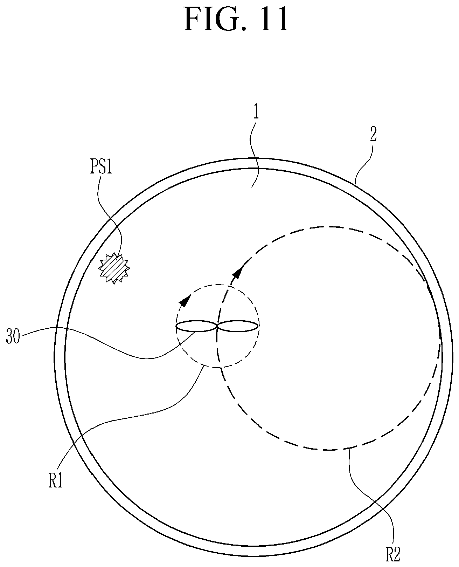

FIG. 10 is a plan view showing laser irradiation of the pulsed laser equipment of FIG. 9 and rotation of the mixer blade of FIG. 9, and FIG. 11 is a plan view that follows FIG. 10 and shows laser irradiation of the pulsed laser equipment and revolution and rotation of the mixer blade.

Referring to FIG. 10 and FIG. 11, when the conductive material particles P1 are laser-ablated in the third step ST3, the mixer blade 30 provided inside the container body 2 containing the solution 1 may be driven to turn. The mixer blade 30 may be driven to perform the revolution R2 while performing the rotation R1. Therefore, the conductive material particles P1 may be uniformly dispersed in the solution 1.

As the mixer blade 30 performs the revolution R2 in the third step, the laser L may be irradiated at a position far from a range of the revolution R2 of the mixer blade 30 in the second step ST2. During the second step ST2, the laser L irradiated from the pulsed laser equipment 20 may be reflected by the reflective glass 22 to be irradiated at a position inconsistent with the range of the revolution R2 of the mixer blade 30. Thus, the laser L may be prevented from being interfered with by the mixer blade 30.

An irradiation position of the laser L may be moved while a position of the mixer blade 30 that performs the rotation R1 and the revolution R2 is adjusted. For example, the mixer blade 30 may be driven and stopped while adjusting revolutions per minute (RPM) of the rotation R1 to 100 to 3500 and adjusting revolutions per minute (RPM) of the revolution R2 to 10 to 500, the laser L may be irradiated, the mixer blade 30 may be driven and stopped four times at intervals of 5 to 10 minutes, and the laser L may be irradiated while moving at 90-degree intervals. Thus, it is possible to increase dispersion force of the conductive material particles P1 in the solution 1.

For example, in a process for manufacturing an electrode, an active material, a conductive material, a filler, and a binder are mixed with a solvent to form a fluid slurry, and the fluid slurry is sprayed or applied on a current collector to dry a liquid solvent.

The conductive material particles P1 may be effectively dispersed within the solution 1 without using a dispersant. Thus, to improve dispersibility of the slurry and simplify the mixing step, an active material slurry may be produced by mixing the conductive material particles with an active material without using the dispersant.

Therefore, an internal resistance may be reduced in the active material layer formed of the active material slurry to which the dispersant is not added, an energy density of the electrode may be increased, and excellent dispersity between the conductive material and the active material may be secured.

While this disclosure has been described in connection with what is presently considered to be practical embodiments, it is to be understood that the disclosure is not limited to the disclosed embodiments, but, on the contrary, is intended to cover various modifications included within the scope of the appended claims.

### <Description of symbols>

| | | | |
|---|---|---|---|
| 1: | solution | 2: | container body |
| 3: | plasma | 4: | bubble |
| 2: | container body | 20: | pulsed laser equipment |
| 21: | control system | 22: | reflective glass |
| 30: | mixer blade | D: | distance |
| L: | laser | P1: | conductive material particle |
| P2: | temperature increase | PS1: | first position |
| PS2: | second position | R1: | rotation |
| R2: | revolution | | |

## Claims

1. A method for dispersing a conductive material using laser ablation in a solution (1), comprising:
a first step (ST1) of introducing conductive material particles (P1) into the solution (1);
a second step (ST2) of irradiating the conductive material particles (P1) with a laser (L);
a third step (ST3) of generating a plasma (3) within the solution (1) to laser-ablate the conductive material particles (P1); and
a fourth step (ST4) of dispersing the conductive material particles (P1) in the solution (1) by the laser ablation.

2. The method as claimed in claim 1, wherein the second step (ST2) causes a primary reaction in the solution (1) by striking the conductive material particles (P1) with the laser (L) such that temperatures of the conductive material particles (P1) are increased (P2).

3. The method as claimed in claim 2, wherein the third step (ST3) comprises performing water decomposition together with gas generation and securing a distance (D) between the conductive material particles (P1) by generating a plasma (3) after the temperatures of the conductive material particles (P1) are increased (P2).

4. The method as claimed in claim 3, wherein the third step (ST3) comprises controlling the generation of the plasma (3) by controlling an irradiation time and an output of the laser (L) such that the plasma (3) is generated in the solution (1) so that vibration is applied between the conductive material particles (P1) and dispersibility of the conductive material particles (P1) is increased.

5. The method as claimed in any of claims 1 to 4, wherein the third step (ST3) comprises turning a mixer blade (30) provided inside a container body (2) comprising the solution (1).

6. The method as claimed in claim 5, wherein the third step (ST3) further comprises revolving and rotating the mixer blade (30).

7. The method as claimed in claim 6, wherein the second step (ST2) comprises irradiating the conductive material particles (P1) with the laser (L) at a position distanced from a range of the revolving of the mixer blade (30) as the mixer blade (30) is revolved in the third step (ST3).

8. The method as claimed in claim 6 or 7, wherein the second step (ST2) comprises irradiating the conductive material particles (P1) with the laser (L) using pulsed laser equipment (20), and wherein light from the laser (L) is reflected by a reflective glass (22) such that the conductive material particles are irradiated at a position outside of a range of the revolving of the mixer blade (30).

9. The method as claimed in any of claims 4 to 8, wherein the fourth step (ST4) comprises increasing a state of the plasma (3) by a reaction between the conductive material particles to form a bubble (4) having a gas phase such that a space in which the conductive material particles (P1) are further dispersed in the solution (1) is generated.

10. The method as claimed in claim 9, wherein the fourth step (ST4) comprises increasing a size of the bubble (4) such that the bubble (4) collapses and the dispersed conductive material particles are further dispersed in the solution (1).

11. The method as claimed in claim 10, wherein the irradiation of the conductive material particles by the laser (L) is repeated (ST31) for a predetermined time so that the conductive material particles (P1) are uniformly dispersed in the solution (1).

12. A device for dispersing a conductive material using laser ablation in a solution (1), comprising:
a container body (2) that is adapted to include the solution (1) and conductive material particles (P1); and
laser equipment (20) that is aligned to irradiate the conductive material particles (P1) with a laser (L).

13. The device as claimed in claim 12, further comprising a mixer blade (30) that is provided within the container body (2) to be driven in revolution and rotation, and
wherein the pulsed laser equipment (20) is configured to irradiate the conductive material particles (P1) with the laser (L) at predetermined time intervals at a first position, a second position, a third position, and a fourth position that are set at 90-degree intervals in the container body (2), and the mixer blade (30) revolves at 90-degree intervals.

14. The device as claimed in claim 12 or 13, further comprising a reflective glass (22) that reflects light from the laser (L) for irradiating the conductive material particles (P1) within the container body (2).

15. The device as claimed in any of claims 12 to 14, wherein the pulsed laser equipment (20) is configured to generate a plasma (3) by irradiating the conductive material particles (P1) with the laser into the solution (1) to laser-ablate the conductive material particles (P1).
